Europäisches Patentamt

European Patent Office

Office européen des brevets

(11) Publication number: **0 363 075**
**A1**

## EUROPEAN PATENT APPLICATION

(21) Application number: 89309885.5

(22) Date of filing: 28.09.89

(51) Int. Cl.⁵: **B65G 51/30**

(30) Priority: 03.10.88 GB 8823171

(43) Date of publication of application:
**11.04.90 Bulletin 90/15**

(84) Designated Contracting States:
**AT BE CH DE ES FR GB GR IT LI LU NL SE**

(71) Applicant: **AIR TUBE CONVEYORS LIMITED**
**Birmingham Road Oldbury**
**Warley West Midlands B69 4HE(GB)**

(72) Inventor: **Henderson, Fraser**
**224 Ralph Road Shirley**
**Solihull West Midlands(US)**
Inventor: **Clifford, Norman**
**Plot 29 Primrose Gardens Slater Street**
**Darlaston West Midlands(US)**

(74) Representative: **Carpenter, David et al**
**MARKS & CLERK Alpha Tower Suffolk Street**
**Queensway**
**Birmingham B1 1TT(GB)**

(54) **Receiver.**

(57) A pneumatic conveyor receiving station comprising a receiver (16) into which an article conveyed along the tube (14) of the pneumatic conveyor passes, there being within the receiver arrestor means (18) for arresting an article entering the receiver (16) from the conveyor tube (14), said receiver (16) being movable, at least in part, between a first position which it occupies during arrival therein of an article from the tube (14) of the conveyor and a second position in which the article received by the receiver is discharged therefrom.

The invention further resides in a conveyor utilizing such a receiving station.

FIG 1

EP 0 363 075 A1

## RECEIVING STATION

This invention relates to a receiving station for a pneumatic conveyor.

A pneumatic conveyor includes an elongate tube along which articles being conveyed travel by virtue of an air flow. It is known to provide such a conveyor with a receiving station in the form of a tube section from which the air flow can escape thus permitting articles to decelerate along a predetermined length of the tube until they reach a stationary condition whereupon they may be lifted from the tube through an aperture therein. Although such a receiving station is adequate for many applications it has, in relation to certain applications, two disadvantages which the present invention seeks to obviate. Firstly where the articles being conveyed are of a high density material, and are travelling at speed, then their momentum is large and a considerable length of tube must be provided at the receiving station within which the articles can decelerate to rest. Secondly, in many instances it is required that articles conveyed to the receiving station are transferred automatically to a further conveyor, for example a belt type conveyor, or into the input mechanism of some further apparatus.

In accordance with the present invention there is provided a pneumatic conveyor receiving station comprising a receiver into which an article conveyed along the tube of the pneumatic conveyor passes, there being within the receiver, arrestor means for arresting an article entering the receiver from the conveyor tube, and, said receiver being movable, at least in part, between a first position which it occupies during arrival therein of a article from the tube of the conveyor, and a second position in which the article received by the receiver is discharged therefrom.

Preferably said arrestor means comprises a buffer for absorbing the kinetic energy of a conveyed article impacting thereagainst.

Conveniently the receiver includes a length of tube housing said arrestor means, and movable, at least in part, between a first position in which the tube receives articles conveyed along the conveyor tube, and a second position in which articles received within the tube are discharged therefrom under gravity.

Conveniently the receiver is perforated to vent the conveyor air flow.

Desirably the tube of the receiver is pivotted about a substantially horizontal axis passing through a region of the tube remote from the conveyor tube.

The invention further resides in a pneumatic conveyor incorporating a receiving station as specified above.

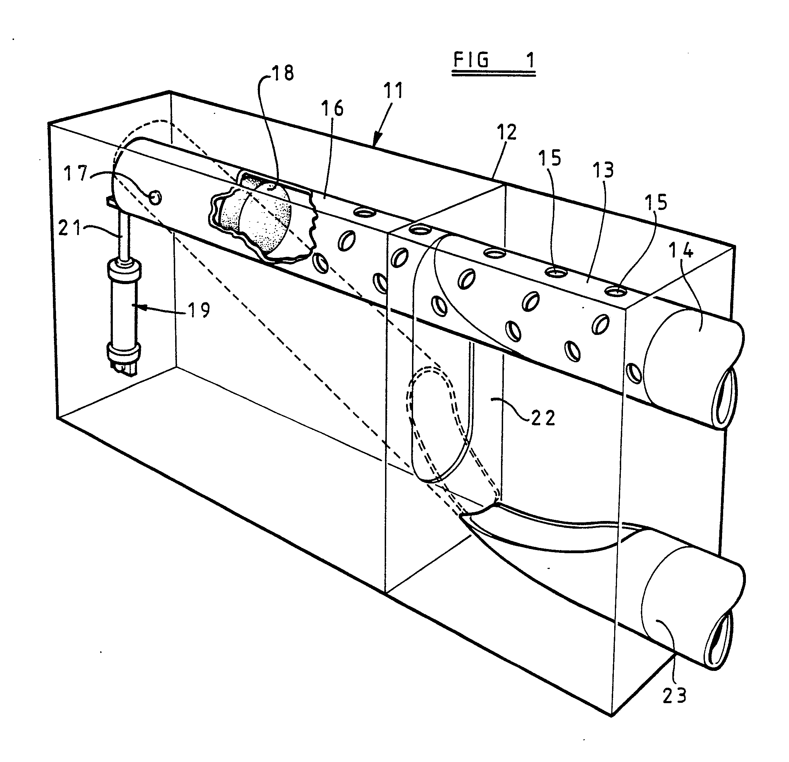

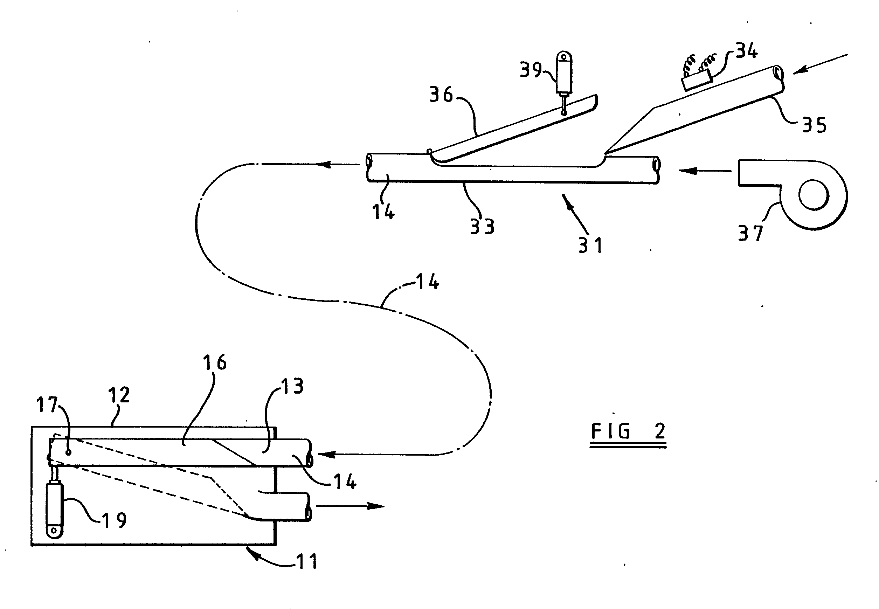

In the accompanying drawings Figure 1 is a diagrammatic perspective view of a pneumatic conveyor receiving station in accordance with one example of the present invention, and Figure 2 is a diagrammatic representation of a pneumatic conveyor utilizing a receiving station of the kind shown in Figure 1.

Referring to the drawings, the receiving station 11 includes a housing 12 supporting a short length 13 of synthetic resin tube. The tube 13 is, in use, coupled through a convenient union (not shown) to the discharge end of the tube 14 of the pneumatic conveyor, the tube 13 being coextensive with the tube 14 and conveniently being of the same material, and the same diameter. The tube 13 extends generally horizontally in use, and over the upper part of its periphery are distributed a plurality of apertures 15 through which air, or other motive gas for the pneumatic conveyor system can escape.

Disposed within the housing 12 adjacent the tube 13 is a further length of identical tube 16 mounted for pivotal movement relative to the housing 11 and the tube 13 by a substantially horizontally extending pivot pin 17. The tube 16 is pivotable relative to the housing 11 and the tube 13 between a first position shown in full lines in the drawing, and a second position shown in dotted lines. In the first position of the tube 16 the tubes 16 and 13 are continuous, the abutting ends of the tubes having been cut obliquely with respect to their longitudinal axis. The axis of pivotal movement of the tube 16 is adjacent the end of the tube 16 remote from the abutting surfaces of the tubes 13 and 16 and thus the tube 16 can be pivotted to said second position in which the abutting end of the tube 16 is displaced below the corresponding end of the tube 13.

Within the tube 16, and spaced from the end which abuts the tube 13, is a pad 18 conveniently formed from a high density, foamed, closed cell, synthetic resin material which acts as a buffer to arrest articles entering the tube 16 in use.

At the far side of the pivot 17 from the tube 13 there is provided a double acting pneumatic ram 19 the free end of the piston rod 21 of which is pivotally connected to the tube 16. The cylinder of the ram is pivotally mounted on the wall of the housing 11, and operation of the ram 19 moves the tube 16 between its first and second positions relative to the tube 13.

The housing 12 includes an abutment 22 which defines the second position of the tube 16 and as can be seen from the drawing the housing 11 also supports a discharge tube 23 which is generally coextensive with the tube 16 in the second position of the tube 16.

In operation, when an article being conveyed along the tube 14 by an air flow therein, is expected at the receiver station the ram 19 will be operated to move the tube 16 to its first position. In the first position the tubes 14, 13, and 16 are coextensive and an article arriving at the receiving station along the tube 14 passes through the tube 13 and into the tube 16. The apertures 15 in the tube 13, and similar apertures in the tube 16 permit deceleration of the article by venting the air flow behind the article to atmosphere. If the article does not decelerate sufficiently rapidly to come to rest when it enters the tube 16 then it will impact against the pad 18 and the material of the pad 18 is chosen such that it will absorb the kinetic energy of the article, thus arresting the article substantially without rebound. It is of course difficult to ensure that there is no rebound, but if there is then the rebound is sufficiently minimal for the article to remain within the tube 16. Thereafter, the ram 19 is operated to pivot the tube 16 to its second position wherein the tube 16 is inclined at a relatively steep angle to the horizontal, and the article within the tube 16 can slide therefrom, under gravity, and into the discharge tube 23. The discharge tube 23 conducts the discharged article to any desired location. For example discharge may take place onto a further conveyor, or into a storage area. As a further alternative discharge may take place into the inlet of a machine for performing further operations on the article.

It will be recognised that an article entering the tube head first is discharged through the tube 23 tail first. Thus in addition to receiving and arresting the article, the article is discharged in an opposite orientation to that in which it is conveyed.

It will be understood that it is not essential that the receiver of the receiving station is a tube such as the tube 16. It would, if desired, be possible for certain applications to substitute a shallow trough for the tube 16 provided of course that the articles entering the trough 16 are not such as to bounce out of the trough when striking the buffer pad 18. Moreover, although it is convenient to have the whole of the receiver, whether it be a tube or a trough, pivoting between the first and second positions, it would of course be possible to pivot only a lower a section of the receiver upon which the received article rests. Thus in the case of the tube 16 an upper section thereof could be stationary, and only a lower section need pivot under the action of the ram or an equivalent actuator to discharge the article through the discharge tube 23.

The manner in which the ram 19 is controlled may vary depending upon the application. For example, in some applications it may not be possible to predict accurately when a conveyed article will reach the receiver station, and thus the tube 14 adjacent the receiving station may be fitted with some form of sensor, for example an optical sensor which provides an output signal when an article is passing along the tube 14 and is closely approaching the receiving station. The signal from the sensor can be used to operate a timing mechanism which immediately actuates the ram 19 to ensure that the tube 16 is in its first position to receive the conveyed article. The time taken for the article to pass from the sensor to the tube 16 can of course be determined accurately, and the timing mechanism can thus be arranged to cause the ram 19 to move the tube 16 to its second position at a predetermined length of time after movement to the first position. Naturally discharge of a received article may be dependent upon readiness of a conveyor, or other apparatus, to receive the article, and thus operation of the ram 19 to move the ram to its second position may be initiated by receipt, in a control mechanism, of a signal from the destination of the article.

In our copending British patent application number 8818612.7 filed on August 5th 1988 (the disclosure of which is imported herein by this reference) there is disclosed an input station for a pneumatic conveyor wherein (see Figure 2) the tube 33, along which articles are conveyed, has an openable cover 36 controlled by a ram 39 similar to the ram 19. A sensor 34 detects the approach, along a supply line 35, of articles to be conveyed, and controls the cover 36 accordingly to ensure entry of articles into the conveying tube 33, 14, and to control the air flow, generated by a blower 37, in the tube 14. For example, it is disclosed in our copending application that articles of low mass, for example synthetic resin hypodermic syringe barrels are best conveyed by holding the cover closed until immediately before an article is intended to enter the tube from the supply, opening the cover to receive the article, and then closing the cover to ensure that the air flow within the tube conveys the article. If the receiving station described above was used in conjunction with such an input station, as shown diagrammatically in Figure 2, then provided that the length of the tube 14 between the two stations was relatively small, and that an appropriate conveying speed was chosen, then both the ram 39 controlling the cover 36 at the inlet station 31 and the ram 19 could be controlled by the same signals, that is to say the signals from the sensor 34 adjacent the input station 31. Thus while the cover 36 is held closed the ram 19 would be operated to maintain the tube 16 in its first position and when the sensor 34 sends a signal causing the cover 36 of the input station 31 to open then the same signal would cause the ram 19 to move the tube 16 to its second position. Naturally the timing of movement of the tube 16 in relation to movement of the cover of the input station may need to be varied dependent upon the length of the tube 14 and the speed of movement of the articles being conveyed. Thus a time delay mechanism may be incorporated so that although operation of the ram 19 is controlled by the sensor controlling movement of the cover of the input station, the timing of the actuation is varied to accommodate the time taken for articles to travel from the input station to the receiving station.

Also disclosed in our copending application 8818612.7 is a variation intended to accommodate articles of relatively high mass (high density) such as metallic inlet and outlet valves for internal combustion engines. When conveying such articles, particularly when the distance through which the articles are to be conveyed is relatively small, it has been found convenient to operate the input station such that the cover is normally open, and is closed at a predetermined intervals after an article in the supply line, for entry into the input station, has been detected. Thus the cover is normally open, the approach of an article is detected, the article enters the input station and a predetermined time after detection the cover is closed, and remains closed for a predetermined length of time sufficient for the article to be accelerated by the air flow to a velocity such that the articles momentum will permit it to reach the destination. Thereafter, the cover is opened so greatly reducing the air flow and leaving the article to continue substantially without further propulsion from the air flow. Where the receiving station described above is used in conjunction with such an input station for articles of high density, then the ram 19 can be operated by the signal which causes closure of the cover of the input station, to move the tube 16 to its first position, and the signal which causes opening of the cover of the input station also causes operation of the ram 19 to move the tube 16 to its second position. Again timing variations may need to be incorporated in order to accommodate the time taken for the article to pass from the input station to the receiving station.

In a modification the perforations 15 are omitted so that the air flow to the receiving station can escape only when the tube 16 is in its open, second position. In such a modification articles may be accelerated along the main conveying tube by ensuring that the tube 16 is in its second position, the air flow being subsequently reduced by moving the tube 16 to its first, closed position so restricting or preventing the flow of air along the main conveying tube in the region of the receiving station. Timer or other control arrangements can be used to effect operation of the ram 19 at appropriate points in the passage of articles along the system.

It will be recognised that in some applications it may even be possible for the ram 19, and the equivalent pneumatic ram of the input station cover, to be operated by the same pneumatic pressure supplies. In such an arrangement of course it would be more difficult to achieve a timing differential between operation of the two rams since normally the rams, connected to the same pneumatic lines, would operate in unison.

In a further embodiment the receiving station disclosed above is used in conjunction with an input station comprising an open end of the main conveying tube through which air is drawn into the system. A pusher or other mechanical device can be utilized to introduce articles to be conveyed, singly into the tube. The air flow in the tube can be generated by a blower arrangement connected in parallel with the tube or by a blower positioned downstream of the receiving station and drawing air through the main conveying tube, the tube 13, and the tube 16. Naturally the pad 18 is arranged to permit the air flow while still acting as an abutment for conveyed articles. Opening of the tube 13 to its second position will break the air flow path therethrough so that an article in the tube can slide therefrom into the discharge tube 23 or other discharge arrangement.

It will further be understood that the conveyor may be provided with a control system incorporating interlocks to ensure that articles cannot be input at an input station until the receiving station has successfully discharged a previously conveyed article and so can be readied, or is actually ready, to receive a further article. Furthermore the interlocks may extend to the destination of articles discharged from the receiving station so that articles cannot be input at an input station until previous articles have been successfully discharged from the receiving station and successfully received at their destination.

Although the examples described above use pneumatic actuators it is to be understood that electromagnetic or electromechanical actuation could be utilized if desired.

## Claims

1 A pneumatic conveyor receiving station comprising a receiver (16) into which an article conveyed along the tube (14) of the pneumatic conveyor passes, the station being characterized in that there is, within the receiver (16), arrestor means (18) for arresting an article entering the receiver (16) from the conveyor tube (14), and, said receiver (16) being movable, at least in part, between a first position which it occupies during arrival therein of an article from the tube (14) of the conveyor, and a second position in which the article received by the receiver (16) is discharged therefrom.

2 A receiving station as claimed in claim 1 characterized in that said arrestor means comprises a buffer (18) for absorbing the kinetic energy of a conveyed article impacting thereagainst.

3 A receiving station as claimed in claim 1 or claim 2 characterized in that the receiver includes a length of tube (16) housing arrestor means (18), and movable, at least in part, between a first position in which the tube (16) receives articles conveyed along the conveyor tube (14), and a second position in which articles received within the tube (16) are discharged therefrom under gravity.

4 A receiving station as claimed in claim 3 characterized in that the tube (16) of the receiver is pivotted about a substantially horizontal axis passing through a region of the tube (16) remote from the conveyor tube (14).

5 A receiving station as claimed in any one of claims 1 to 4 characterized in that the receiver (16) is perforated to permit the conveyor system airflow to vent at the receiving station so permitting deceleration of conveyed articles.

6 A pneumatic conveyor characterized by incorporating a receiving station as claimed in any one of claims 1 to 5.

7 A conveyor as claimed in claim 6 characterized by an inlet station having an openable tube region to permit input of articles to be conveyed.

8 A conveyor as claimed in claim 7 characterized by control means effecting operation of the inlet station and the receiving station in a predetermined relationship.

9 A conveyor as claimed in claim 8 characterized in that said control means includes a timer whereby operation of the receiving station is effected at a predetermined time after operation of the inlet station.

FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C- 115 718 (LAMSON)<br>* Page 1, right-hand column, line 3 - page 2, left-hand column, line 5; figures 1-3 * | 1-4,6 | B 65 G 51/30 |
| X | DE-C- 112 958 (BATCHELLER)<br>* Page 1, right-hand column, line 6 - page 2, left-hand column, line 10; figure 2 * | 1,2,5,6 | |
| .A | | 3,4,6 | |
| A | GB-A-1 231 730 (GORKOVSKY AVTOMOBILNY ZAVOD)<br>* Page 1, lines 74-84; figure 2 * | 1,2,6 | |
| A | DE-B-1 286 462 (DEUTSCHE BUNDESPOST)<br>* Column 2, lines 13-18; figure * | 3,4,6 | |
| A | US-A-4 003 530 (DAVIS)<br>* Column 3, lines 38-43; figure 3 * | 5,6 | |
| A | DE-B-1 203 687 (STANDARD ELEKTRIK LORENZ)<br>* Column 3, lines 6-15 * | 7 | TECHNICAL FIELDS SEARCHED (Int. Cl.5)<br><br>B 65 G |
| A | US-A-4 315 704 (C.K. KELLEY et al.)<br>* Column 4, lines 7-45; figures 1,2,6,8 * | 7-9 | |

The present search report has been drawn up for all claims

| Place of search | Date of completion of the search | Examiner |
|---|---|---|
| THE HAGUE | 09-01-1990 | NEVILLE D.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)